# EUROPEAN PATENT APPLICATION

(11) **EP 2 586 754 A1**
(43) Date of publication of application: **01.05.2013**
(21) Application number: 11306403.4
(22) Date of filing: 28.10.2011
(51) Int. Cl.: C04B 28/02, C04B 28/04, C09K 8/487

(54) **Compositions and methods for completing subterranean wells**

(71) Applicant: Services Pétroliers Schlumberger, 75007 Paris (FR); Schlumberger Technology B.V., 2514 The Hague (NL); Schlumberger Holdings Limited, Tortola (VG); PRAD Research and Development, Tortola (VG)
(72) Inventor: Michaux, Michel, 92142 Clamart (FR); Pyatina, Tatiana, 92142 Clamart (FR); Gabilly, Laurent, 92142 Clamart (FR); Komocki, Sylwia, 92142 Clamart (FR)
(74) Representative: Vandermolen, Mathieu

(57) **Abstract**

High-specific-gravity micronized particulates, added to cement slurries in conjunction with certain high-molecular-weight water-soluble polymers, improve fluid-loss control of cement slurries during placement in subterranean wells. Preferably, the particulates have a specific gravity higher than 3, and a median particle size smaller than 3 µm. Preferred particulates include barite, manganese tetraoxide, titanium oxide, iron titanium oxide and aluminum oxide.

## Description

### BACKGROUND

The statements in this section merely provide background information related to the present disclosure and may not constitute prior art.

This disclosure relates to compositions and methods for completing subterranean wells, in particular, fluid compositions and methods for completion operations during which the fluid compositions are pumped into a wellbore and make contact with subterranean rock formations.

In the course of completing oil and gas wells and the like, various types of fluids are circulated in the wellbore. These fluids include, but are not limited to, drilling fluids, spacer fluids, cement slurries and gravel-packing fluids. In addition, these fluids typically contain solid particles. Fluid hydrostatic pressure and pumping pressure create a pressure differential between the wellbore and the surrounding formation rock. As a result, the liquid portion of the fluid has a tendency to enter pores in the subterranean rock, migrate away from the wellbore, and leave the solid particles behind. In other words, a filtration process occurs that is commonly known in the art as "fluid loss."

Excessive fluid loss may have undesirable consequences. For example, as more and more liquid exits the wellbore and penetrates the subterranean rock, the solids left behind may concentrate and form a plug, preventing further fluid flow in the wellbore and terminating the completion process prematurely. Liquid entering the formation rock may interact with minerals such as clays, causing the rock to lose permeability—a condition known in the art as "formation damage." The rheological and chemical properties of a completion-fluid system may also be sensitive to the ratio between the liquid and solid ingredients. Disruption of the optimal liquid-solid ratio arising from fluid loss may have a detrimental effect on the completion process and cause failure.

Control of fluid loss is particularly important during primary and remedial well-cementing operations. The goal of primary cementing is to pump a cement slurry in the well and fill the annular space between a casing string and the subterranean rock. The slurry may be pumped down through the casing interior and up the annulus, or vice versa. When the cement slurry hardens, it supports the casing in the well and provides a hydraulic seal between formation strata. Fluid-loss control during primary cementing is necessary to not alter the rheological properties of the cement slurry, to ensure that chemical reactions in the slurry proceed properly, and to obtain a durable hardened cement that will provide hydraulic isolation throughout the life of the well.

Remedial cementing consists of two main procedures—plug cementing and squeeze cementing. Fluid-loss control is particularly pertinent to squeeze cementing. Squeeze cementing is a process for restoring hydraulic isolation. A cement slurry is pumped downhole to seal casing leaks or voids behind the casing that have allowed hydraulic communication between formation strata. Squeeze cementing involves injecting a cement slurry into strategic locations that are often very small. Fluid-loss control is necessary to avoid premature solids bridging, and to ensure that the cement slurry arrives and hardens at the correct location.

Sufficient fluid-loss control is generally achieved by adding materials that hinder the filtration process; such materials are called "fluid-loss additives." They may generally be particulate materials or water-soluble polymers. Common particulate materials include bentonite, attapulgite and latexes based on styrene butadiene, vinylidene chloride and vinyl acetate. Effective water-soluble polymers include cellulose derivatives and synthetic polymers that may be anionic, cationic or nonionic. Common polymers employed for fluid-loss control include (but are not limited to) hydroxyethyl cellulose, hydroxyethyl carboxymethyl cellulose, polyvinylpyrrolidone, polyvinyl alcohol, polyethylene imine and co- and terpolymers derived from acrylamide. More complete information concerning fluid-loss additives may be found in the following publication—Nelson EB, Michaux M and Drochon B: "Cement Additives and Mechanisms of Action," in Nelson EB and Guillot D (eds.): Well Cementing-2nd Edition, Houston: Schlumberger (2006) 80-87.

Achieving sufficient fluid-loss control tends to be increasingly difficult as the well temperature rises. It would be therefore desirable to provide means by which fluid-loss may be better controlled even at elevated temperatures.

### SUMMARY

In an aspect, embodiments relate to methods for cementing a subterranean well comprising: preparing a slurry comprising an inorganic cement, water, a water-soluble-polymer fluid-loss additive and a particulate material having a specific gravity higher than about 3 and a median particle size smaller than about 3 µm; and placing the slurry in the well.

In a further aspect, embodiments relate to methods for enhancing the fluid-loss control during placement of a cement slurry into a subterranean well comprising: preparing a slurry comprising an inorganic cement, water and a water-soluble polymer; adding a particulate material to the slurry whose specific gravity is higher than about 3 and whose median particle size is smaller than about 3 µm; and placing the slurry in the well.

In yet a further aspect, embodiments relate to methods for treating a subterranean well, comprising: preparing a slurry comprising an inorganic cement, water and a water-soluble polymer; adding a particulate material to the slurry whose specific gravity is higher than about 3 and whose median particle size is smaller than about 3 µm; and placing the slurry in the well.

### DETAILED DESCRIPTION

At the outset, it should be noted that in the development of any such actual embodiment, numerous implementation—specific decisions must be made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein can also comprise some components other than those cited. In the summary and this detailed description, each numerical value should be read once as modified by the term "about" (unless already expressly so modified), and then read again as not so modified unless otherwise indicated in context. Also, in the summary and this detailed description, it should be understood that a concentration range listed or described as being useful, suitable, or the like, is intended that any and every concentration within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific, it is to be understood that inventors appreciate and understand that any and all data points within the range are to be considered to have been specified, and that inventors possessed knowledge of the entire range and all points within the range.

Without wishing to be bound by any theory, the loss of fluid-loss control may result from polymer hydrolysis, thermal degradation of the polymer, a drop in the viscosity of the interstitial water or combinations thereof.

Fluid-loss control is an important performance parameter of well-completion fluids such as drilling fluids, spacer fluids, cement slurries and gravel-packing fluids. The current application discloses well-completion-fluid compositions that employ fine particulate additives to enhance fluid-loss control.

The authors have determined that adding micronized, high-density particulates can significantly enhance the fluid-loss control of inorganic cement slurries, when used in conjunction with high-molecular-weight water-soluble polymers. The particles preferably have a specific gravity higher than about 3, and a median particle size smaller than about 3 µm. The preferred particulate materials include (but are not limited to) barite, manganese tetraoxide, iron oxide, iron titanium oxide, titanium oxide or aluminum oxide, and mixtures thereof. Of these, manganese tetraoxide, titanium oxide, aluminum oxide and barite are preferred. The particulate-material concentration is preferably between about 1% and about 150% by weight of cement, and more preferably between about 10% and 100% by weight of cement. The disclosed slurries are particularly useful in wells with bottomhole temperatures higher than or equal to about 177°C.

The preferred water-soluble polymers include (but are not limited to) copolymers, terpolymers, tetrapolymers and pentapolymers prepared from monomers selected from the list comprising 2-acrylamido-2-methylpropane sulfonic acid and salts thereof, acrylamide, N-vinyl formamide, N-vinyl-N-methyl acetamide, N-vinyl pyrrolidone, acrylic acid, vinyl phosphonic acid and N-acryloylmorpholine or combinations thereof. Of these, copolymers of 2-acrylamido-2-methylpropane sulfonic acid and acrylamide are most preferred. Preferably, the sodium or ammonium salts of 2-acrylamido-2-methylpropane sulfonate are used to prepare the copolymers. Homopolymers of sulfonated styrene may also be used. The polymeric species described above may be used alone or in combination. The preferred polymer-molecular-weight range is between about 200,000 and 2,000,000 Daltons, more preferably between about 500,000 and 2,000,000 Daltons.

The inorganic cements may include (but would not be limited to) Portland cement, calcium aluminate cement, Class C fly ash, blends of lime and silica, chemically activated phosphate ceramics, alkali activated blast-furnace slags, geopolymers, fly ash, zeolites, or cement-kiln dust, and mixtures thereof. Of these, Portland cement is preferred.

The slurries may further comprise an inorganic clay to reduce sedimentation or the appearance of free fluid. Bentonite, attapulgite, sepiolite, or laponite, and mixtures thereof may be used.

When the bottomhole temperature exceeds about 110°C (230°F), it is usually necessary to add at least 35% silica by weight of cement to prevent the formation of mineral phases that cause a strength reduction and a permeability increase.

In an aspect, embodiments relate to methods for cementing a subterranean well. A slurry is prepared that comprises an inorganic cement, water, a water-soluble-polymer fluid-loss additive and a particulate material. The particulate material preferably has a specific gravity higher than about 3 and a median particle size smaller than about 3 µm. The particulate material preferably comprises barite, manganese tetraoxide, iron oxide, iron titanium oxide, titanium oxide, or aluminum oxide, and mixtures thereof. Of these, manganese tetraoxide, titanium oxide, aluminum oxide and barite are preferred. The particulate-material concentration is preferably between about 1% and 150% by weight of cement.

The water-soluble polymer may comprise copolymers, terpolymers, tetrapolymers and pentapolymers prepared from monomers selected from the list comprising 2-acrylamido-2-methylpropane sulfonic acid and salts thereof, acrylamide, N-vinyl formamide, N-vinyl-N-methyl acetamide, N-vinyl pyrrolidone, acrylic acid, vinyl phosphonic acid and N-acryloylmorpholine or combinations thereof. Of these, copolymers of 2-acrylamido-2-methylpropane sulfonic acid and acrylamide are most preferred. Preferably, the sodium or ammonium salts of 2-acrylamido-2-methylpropane sulfonate are used to prepare the copolymers. Homopolymers of sulfonated styrene may also be used. The polymeric species described above may be used alone or in combination. The preferred polymer-molecular-weight range is between about 200,000 and 2,000,000 Daltons, more preferably between about 500,000 and 2,000,000 Daltons.

In a further aspect, embodiments relate to methods for enhancing fluid-loss control during placement of a cement slurry into a subterranean well. A slurry is prepared that comprises an inorganic cement, water, a water-soluble-polymer fluid-loss additive and a particulate material. The particulate material preferably has a specific gravity higher than about 3 and a median particle size smaller than about 3 µm. The particulate material preferably comprises barite, manganese tetraoxide, iron oxide, iron titanium oxide, titanium oxide, or aluminum oxide, and mixtures thereof. The particulate-material concentration is preferably between about 1% and 150% by weight of cement.

The slurry may further comprise silica. Preferably, a portion of the silica has a median particle size smaller than about 3 µm. The slurry may also further comprise an inorganic clay. Bentonite, attapulgite, sepiolite, or laponite, and mixtures thereof may be used.

The water-soluble polymer may comprise copolymers, terpolymers, tetrapolymers and pentapolymers prepared from monomers selected from the list comprising 2-acrylamido-2-methylpropane sulfonic acid and salts thereof, acrylamide, N-vinyl formamide, N-vinyl-N-methyl acetamide, N-vinyl pyrrolidone, acrylic acid, vinyl phosphonic acid and N-acryloylmorpholine or combinations thereof. Of these, copolymers of 2-acrylamido-2-methylpropane sulfonic acid and acrylamide are most preferred. Preferably, the sodium or ammonium salts of 2-acrylamido-2-methylpropane sulfonate are used to prepare the copolymers. Homopolymers of sulfonated styrene may also be used. The polymeric species described above may be used alone or in combination. The preferred polymer-molecular-weight range is between about 200,000 and 2,000,000 Daltons, more preferably between about 500,000 and 2,000,000 Daltons.

In yet a further aspect, embodiments relate to methods for treating a subterranean well. A slurry is prepared that comprises an inorganic cement, water, a water-soluble-polymer fluid-loss additive and a particulate material. The particulate material preferably has a specific gravity higher than about 3 and a median particle size smaller than about 3 µm. The particulate material preferably comprises barite, manganese tetraoxide, iron oxide, iron titanium oxide, titanium oxide, or aluminum oxide, and mixtures thereof. The particulate-material concentration is preferably between about 1% and 150% by weight of cement. The water-soluble polymer may comprise copolymers, terpolymers, tetrapolymers and pentapolymers prepared from monomers selected from the list comprising 2-acrylamido-2-methylpropane sulfonic acid and salts thereof, acrylamide, N-vinyl formamide, N-vinyl-N-methyl acetamide, N-vinyl pyrrolidone, acrylic acid, vinyl phosphonic acid and N-acryloylmorpholine or combinations thereof. Of these, copolymers of 2-acrylamido-2-methylpropane sulfonic acid and acrylamide are most preferred. Preferably, the sodium or ammonium salts of 2-acrylamido-2-methylpropane sulfonate are used to prepare the copolymers. Homopolymers of sulfonated styrene may also be used. The polymeric species described above may be used alone or in combination. The preferred polymer-molecular-weight range is between about 200,000 and 2,000,000 Daltons, more preferably between about 500,000 and 2,000,000 Daltons.

Those skilled in the art will appreciate that the methods described above may be equally applicable to other well-service fluids, including (but not limited to) drilling fluids, spacer fluids, scavenger slurries and gravel-pack fluids. Furthermore, those skilled in the art will appreciate that the slurries may further comprise accelerators, retarders, extenders, fluid-loss additives, dispersants, gas-generating agents, antifoam agents, chemical-expansion agents, flexible additives, pozzolans and/or fibers.

For all embodiments, the solids in the slurry may be present in at least two particle-size ranges. Such designs may include "engineered-particle-size" systems in which particle packing is optimized. A thorough description of these systems may be found in the following publication. Nelson EB, Drochon B and Michaux M: "Special Cement Systems," in Nelson EB and Guillot D (eds.) Well Cementing-2nd Edition, Houston, Schlumberger (2006) 233-268.

Further illustration of the disclosure is provided by the following examples.

### EXAMPLES

All of the tests presented in the following examples were performed in accordance with recommended practices specified by the American Petroleum Institute (API) and the International Organization for Standards (ISO). The methods are presented in the following publication—*Petroleum and Natural Gas Industries*—*Cements and Materials for Well Cementing*—*Part 2: Testing of Well Cements,* International Organization for Standards Publication No. 10426-2.

Five micronized materials, described in Table 1, were tested. The microcrystalline silica is available from Schlumberger. Micromax™ is available from Elkem, Oslo, Norway. Ti-Pure™ R-902 is available from DuPont Titanium Technologies, APA 0.5 is available from Ceralox division of Sasol North America Inc., and barite is available from M-I SWACO, Houston, Texas. The test done with microcrystalline silica were made for comparative purposes as the material has a median particle size higher than 3µm and a specific gravity below 3.

**Table 1. Micronized materials.**

| **Material** | **Chemical Composition** | **Median Particle Size (µm)** | **Specific Gravity** |
|---|---|---|---|
| microcrystalline silica | SiO₂ | 3.2 | 2.65 |
| Micromax™ | Mn₃O₄ | 2.2 | 4.89 |
| Ti-Pure™ R-902 | TiO₂ | 0.6 | 4.15 |
| APA 0.5 | Al₂O₃ | 0.3 | 3.98 |
| Barite | BaSO₄ | 1.7 | 4.37 |

### EXAMPLE 1

Six solid blends were prepared. Their compositions are presented in Table 2. The amounts of each component are expressed in percentages by volume of the blends (BVOB). The cement was Dyckerhoff Black Label Class G, with a median particle size of about 15 µm. The crystalline silica had a median particle size of about 315 µm, the small hematite had a median particle size of about 32 µm, and the large hematite has a median particle size of about 315 µm.

**Table 2. Cement-blend compositions.**

| **Blend #** | **1** | **2** | **3** | **4** | **5** | **6** |
|---|---|---|---|---|---|---|
| Cement | 33 | 33 | 33 | 33 | 33 | 33 |
| Crystalline Silica | 41 | 41 | 41 | 41 | 41 | 41 |
| Small Hematite | 7 | 7 | 7 | 7 | 7 | 7 |
| Large Hematite | 9 | - | - | - | - | - |
| Microcrystalline silica | 10 | 19 | 10 | 10 | 10 | 10 |
| Micromax™ | - | - | 9 | - | - | - |
| Ti-Pure™ | - | - | - | 9 | - | - |
| APA 0.5 | - | - | - | - | 9 | - |
| EMI1012UF | - | - | - | - | - | 9 |

Cement slurries were prepared from each of the blends. Several additives were added to each blend (Table 3), and sufficient water was added to achieve a solid-volume fraction (SVF) of 0.58.

**Table 3. Additives.**

| **Additive** | **Function** | **Concentration** |
|---|---|---|
| silicone emulsion | antifoam agent | 4.2 L/tonne of blend |
| blend of sodium pentaborate and pentasodium ethylenediamine tetramethylene phosphonate (weight ratio: 9.3:1) | retarder | 33.3 L/tonne of blend |
| Narlex™ D72 | dispersant | 1.0% by weight of blend |
| UNIFLAC™ | fluid-loss additive | 1.68% by weight of water |

Narlex™ D72 is available from Akzo Nobel. UNIFLAC™ is available from Schlumberger.

Various amounts of bentonite were added to the blends described in Table 2. Bentonite improves the stability of cement slurries, minimizing solids sedimentation and the development of free fluid. The bentonite concentrations and the slurry densities are presented in Table 4.

**Table 4. Bentonite concentrations and slurry densities.**

| **Blend #** | **1** | **2** | **3** | **4** | **5** | **6** |
|---|---|---|---|---|---|---|
| Bentonite (% by weight of blend | 0.8 | 0.6 | 0.7 | 0.6 | 0.7 | 0.7 |
| Slurry Density (kg/m³) | 2252 | 2134 | 2256 | 2219 | 2204 | 2230 |

The cement slurries were mixed for 35 seconds in a Waring blender rotating at 12,000 RPM. Then, the slurries were conditioned for 20 minutes at 85°C in an atmospheric consistometer. The rheological properties of each slurry were measured with a Chan 35 rotational viscometer (available from Chandler Engineering, Tulsa, Oklahoma), using the R1B5 rotor-bob combination. This combination provides a sufficiently large gap between the rotor and bob to allow coarse particles to flow freely. The amounts of free fluid were measured after pouring the slurries into vertical cylinders, and placing the cylinders in an 85°C oven for two hours. The results are shown in Table 5.

**Table 5. Rheological properties and free-fluid results.**

| **Blend #** | **1** | **2** | **3** | **4** | **5** | **6** |
|---|---|---|---|---|---|---|
| Viscometer | | | | | | |
| Readings: | | | | | | |
| 300 RPM | 135 | 184 | 113 | 135 | 160 | 166 |
| 200 RPM | 81 | 129 | 85 | 99 | 120 | 115 |
| 100 RPM | 46 | 75 | 52 | 65 | 78 | 70 |
| 60 RPM | 31 | 53 | 38 | 50 | 58 | 49 |
| 30 RPM | 19 | 34 | 25 | 35 | 42 | 31 |
| 6 RPM | 7 | 15 | 12 | 20 | 24 | 15 |
| 3 RPM | 5 | 11 | 10 | 16 | 20 | 12 |
| 10-sec gel* | 10 | 17 | 15 | 22 | 27 | 17 |
| 10-min gel* | 20 | 38 | 34 | 41 | 55 | 39 |
| 1-min stirring* | 7 | 15 | 13 | 22 | 26 | 16 |
| Free Fluid (%) | 0 | 0.8 | 0 | 0 | 0 | 0.8 |

| | | | | | | |
|---|---|---|---|---|---|---|
| * readings recorded at 6 RPM | | | | | | |

### EXAMPLE 2

The slurries of Example 1 were placed in a stirred fluid-loss cell, and heated to a final temperature of 204°C. The cell pressure was 10.34 MPa. The heat-up time to reach 204°C was 90 min (2°C/min). The slurries were agitated at 150 RPM for 5 min before measuring the fluid-loss rate. The differential pressure was 6.89 MPa. The volume of collected filtrate collected after 30 minutes was multiplied by 2 to calculate the API fluid-loss value, an acceptable fluid loss value is considered to be up to 50 mL/30min. Results are shown in Table 6.

**Table 6. Fluid-loss results at 204°C.**

| **Blend #** | **1** | **2** | **3** | **4** | **5** | **6** |
|---|---|---|---|---|---|---|
| API Fluid Loss | 84 | 82 | 46 | 50 | 20 | 30 |
| (mL/30 min) | | | | | | |

The stirred fluid-loss tests were repeated at a higher final temperature—232°C. The cell pressure was 10.34 MPa. The heat-up time to reach 232°C was 90 min (2.31°C/min). The slurries were agitated at 150 RPM for 5 min before measuring the fluid-loss rate. The differential pressure was 6.89 MPa. The volume of collected filtrate was multiplied by 2 to calculate the API fluid-loss value. Results are shown in Table 7.

**Table 7. Fluid-loss results at 232°C.**

| **Blend #** | **1** | **2** | **3** | **4** | **5** | **6** |
|---|---|---|---|---|---|---|
| API Fluid Loss | 60 | 82 | 30 | 34 | 18 | 31 |
| (mL/30 min) | | | | | | |

### EXAMPLE 3

Five solid blends were prepared. Their compositions are presented in Table 8. The amounts of each component are expressed in percentages by volume of the blends (BVOB). The cements and particulate materials were the same as those described in Example 1.

**Table 8. Cement-blend compositions.**

| **Blend #** | **7** | **8** | **9** | **10** | **11** |
|---|---|---|---|---|---|
| Cement | 33 | 33 | 33 | 33 | 33 |
| Crystalline Silica | 41 | 41 | 41 | 41 | 41 |
| Small Hematite | 7 | 7 | 7 | 7 | 7 |
| Large Hematite | 9 | - | - | - | - |
| Microcrystalline silica | 10 | 19 | 10 | 10 | 10 |
| Micromax™ | - | - | 9 | - | - |
| APA 0.5 | - | - | - | 9 | - |
| Barite | - | - | - | - | 9 |

Cement slurries were prepared from each of the blends. Several additives were added to each blend (Table 9), and sufficient water was added to achieve a solid-volume fraction (SVF) of 0.58.

**Table 9. Additives**

| **Additive** | **Function** | **Concentration** |
|---|---|---|
| silicone emulsion | antifoam agent | 4.2 L/tonne of blend |
| blend of sodium pentaborate and pentasodium ethylenediamine tetramethylene phosphonate (weight ratio: 9.3:1) | retarder | 50.1 L/tonne of blend |
| Narlex™ D72 | dispersant | 1.0% by weight of blend |
| UNIFLAC™ | fluid-loss additive | 1.68% by weight of water |

Narlex™ D72 is available from Akzo Nobel. UNIFLAC™ is available from Schlumberger.

Various amounts of bentonite were added to the blends described in Table 8. Bentonite improves the stability of cement slurries, minimizing solids sedimentation and the development of free fluid. The bentonite concentrations and the slurry densities are presented in Table 10.

**Table 10. Bentonite concentrations and slurry densities.**

| **Blend #** | **7** | **8** | **9** | **10** | **11** |
|---|---|---|---|---|---|
| Bentonite (% by weight of blend | 0.8 | 0.6 | 0.7 | 0.7 | 0.7 |
| Slurry Density (kg/m³) | 2254 | 2137 | 2258 | 2204 | 2231 |

The cement slurries were mixed for 35 seconds in a Waring blender rotating at 12,000 RPM. Then, the slurries were conditioned for 20 minutes at 85°C in an atmospheric consistometer. The rheological properties of each slurry were measured with a Chan 35 rotational viscometer (available from Chandler Engineering, Tulsa, Oklahoma), using the R1B5 rotor-bob combination. This combination provides a sufficiently large gap between the rotor and bob to allow coarse particles to flow freely. The amounts of free fluid were measured after pouring the slurries into vertical cylinders, and placing the cylinders in an 85°C oven for two hours. The results are shown in Table 11.

**Table 11. Rheological properties and free-fluid results.**

| **Blend #** | **7** | **8** | **9** | **10** | **11** |
|---|---|---|---|---|---|
| Viscometer | | | | | |
| Readings: | | | | | |
| 300 RPM | 210 | 220 | 122 | 137 | 166 |
| 200 RPM | 138 | 141 | 86 | 105 | 119 |
| 100 RPM | 87 | 80 | 51 | 68 | 71 |
| 60 RPM | 50 | 55 | 36 | 51 | 50 |
| 30 RPM | 24 | 34 | 24 | 36 | 33 |
| 6 RPM | 9 | 14 | 11 | 20 | 16 |
| 3 RPM | 7 | 10 | 8 | 17 | 12 |
| 10-sec gel* | 15 | 13 | 15 | 21 | 18 |
| 10-min gel* | 31 | 35 | 28 | 48 | 28 |
| 1-min stirring* | 11 | 13 | 12 | 20 | 17 |
| Free Fluid (%) | 1.2 | 0.4 | 1.2 | 0 | 0.2 |

| | | | | | |
|---|---|---|---|---|---|
| * readings recorded at 6 RPM | | | | | |

### EXAMPLE 4

The slurries of Example 3 were placed in a stirred fluid-loss cell, and heated to a final temperature of 260°C. The cell pressure was 10.34 MPa. The heat-up time to reach 260°C was 90 min (2.62°C/min). The slurries were agitated at 150 RPM for 5 min before measuring the fluid-loss rate. The differential pressure was 6.89 MPa. The volume of collected filtrate was multiplied by 2 to calculate the API fluid-loss value. The results, shown in Table 12, clearly show the beneficial effect of the presence of the additives with specific gravities higher than 3.

**Table 12. Fluid-loss results at 260°C.**

| Blend # | **7** | **8** | **9** | **10** | **11** |
|---|---|---|---|---|---|
| API Fluid Loss | 110 | 123 | 38 | 34 | 41 |
| (mL/30 min) | | | | | |

Although only a few example embodiments have been described in detail above, those skilled in the art will readily appreciate that many modifications are possible in the example embodiments without materially departing from this disclosure. Accordingly, all such modifications are intended to be included within the scope of this disclosure as defined in the following claims.

## Claims

1. A method for cementing a subterranean well, comprising:
(i) preparing a slurry comprising an inorganic cement, water, a water-soluble-polymer fluid-loss additive and a particulate material, wherein the particulate material has a specific gravity higher than about 3 and a median particle size smaller than about 3 µm; and
(ii) placing the slurry in the well.

2. The method of claim 1, wherein the particulate material comprises barite, manganese tetraoxide, iron oxide, iron titanium oxide, titanium oxide, or aluminum oxide, and mixtures thereof.

3. The method of claim 1 or 2, wherein the particulate-material concentration is between about 1% and about 150% by weight of cement.

4. The method of any one of claims 1-3, wherein the slurry further comprises silica.

5. The method of any one of claims 1-4, wherein the slurry further comprises an inorganic clay.

6. The method of any one of claims 1-5, wherein the water-soluble polymer comprises copolymers, terpolymers, tetrapolymers and pentapolymers prepared from monomers selected from the list comprising 2-acrylamido-2-methylpropane sulfonic acid and salts thereof, acrylamide, N-vinyl formamide, N-vinyl-N-methyl acetamide, N-vinyl pyrrolidone, acrylic acid, vinyl phosphonic acid and N-acryloylmorpholine, or homopolymers of styrene sulfonate, or combinations thereof.

7. The method of any one of claims 1-6, wherein the polymer molecular weight is between about 200,000 and about 2,000,000 Daltons.

8. The method of any one of claims 1-7, wherein the bottomhole temperature in the well is higher than or equal to 177°C.

9. A method for enhancing fluid-loss control during placement of a cement slurry into a subterranean well, comprising:
(i) preparing a slurry comprising an inorganic cement, water and a water-soluble polymer;
(ii) adding a particulate material to the slurry whose specific gravity is higher than about 3 and whose median particle size is smaller than about 3 µm; and
(iii) placing the slurry in the well.

10. The method of claim 9, wherein the particulate material comprises barite, manganese tetraoxide, iron oxide, iron titanium oxide, titanium oxide, or aluminum oxide, and mixtures thereof.

11. The method of claim 9 or 10, wherein the particulate-material concentration is between about 1% and about 150% by weight of cement.

12. The method of any one of claims 9-11, wherein the slurry further comprises silica.

13. The method of any one of claims 9-12, wherein the slurry further comprises an inorganic clay.

14. The method of any one of claims 9-13, wherein the water-soluble polymer comprises copolymers, terpolymers, tetrapolymers and pentapolymers prepared from monomers selected from the list comprising 2-acrylamido-2-methylpropane sulfonic acid and salts thereof, acrylamide, N-vinyl formamide, N-vinyl-N-methyl acetamide, N-vinyl pyrrolidone, acrylic acid, vinyl phosphonic acid and N-acryloylmorpholine, or homopolymers of styrene sulfonate, or combinations thereof.

15. The method of any one of claims 9-14, wherein the polymer molecular weight is between about 200,000 and about 2,000,000 Daltons.
